# EUROPEAN PATENT APPLICATION

(11) **EP 0 887 994 A1**
(43) Date of publication of application: **30.12.1998**
(21) Application number: 96941181.8
(22) Date of filing: 06.12.1996
(51) Int. Cl.: H04N 1/32, H04L 13/00, H04N 1/00

(54) **IMAGE TRANSMISSION APPARATUS**

(30) Priority: 14.12.1995 JP 325429/95
(71) Applicant: MATSUSHITA GRAPHIC COMMUNICATION SYSTEMS, INC., Meguro-ku, Tokyo 153 (JP)
(72) Inventor: SEKIGUTI, Kiyonori, Meguro-ku, Tokyo 153 (JP)
(74) Representative: Grünecker, Kinkeldey, Stockmair & Schwanhäusser Anwaltssozietät
(86) International application number: PCT/JP96/03566
(87) International publication number: WO 97/22203

(57) **Abstract**

In order to make it possible to transmit and receive image data for facsimile communication on a computer network, especially on the Internet, image processing section 17 converts the image data for facsimile into the image file that can be transmitted and received on the Internet, and further format converting section 3 generates an electric mail, a registration file so on using the image file, a destination address and so on.

## Description

### Technical Field

The present invention relates to an image communication apparatus which transmits and receives image data via communication networks.

### Background Art

Nowadays, transmission of images such as documents, photographs, and so on to a specified address at a remote place via communication lines has been widely prevalent in the field of communication. On the other hand, in the area of computer networks in which a number of users connect, transmission and reception of character data, sound data, image data, and so on have been widely prevalent. In particular, on the Internet which has expanded greatly today, image data is most frequently handled. Therefore, it is advantageous that facsimile communications of image data common to both parties and exchange thereof via computer networks are carried out without any limitations.

However, communication protocols in the field of communications are remarkably different from the network protocols in computer networks. For example, image data is transmitted in compliance with protocols such as G3, G4 and so on, in a facsimile apparatus, and image data written in the HTML language (Hyper Text Markup Language) is transmitted and received in compliance with protocols such as TCP/IP (Transfer Control Protocol/Internet Protocol). Therefore, there was a problem that image data transmitted by facsimile apparatus could not be transmitted and received through the Internet, and image data transmitted and received via the Internet could not be transmitted by facsimile apparatus.

### Disclosure of Invention

In order to solve the above-mentioned problem, an image communication apparatus according to the invention is constructed so that the first image data complying with the first image communication protocol is inputted, the above-mentioned first image data is converted into the second image data complying with the second image communication protocol, the above-mentioned second image data is outputted while the second image data complying with the second image communication protocol is inputted, the above-mentioned second image data is converted into the second image data complying with the first image communication protocol, and the above-mentioned first image data is outputted. Thereby, it will be possible to freely transmit and receive image data without being influenced by communication protocols.

Furthermore, the image communication apparatus according to the invention is constructed so that image data is transmitted and received through a computer network such as a Local Area Network, the Internet, etc. Thereby, it will be possible to transmit and receive image data in a wide range.

Still furthermore, the image communication apparatus according to the invention is constructed so as to receive data compacted, which expresses images under the first communication protocol and to convert the compacted data into data so that the data is able to match the second communication protocol. Therefore, it is possible to decrease a memory area for processing data and to shorten the processing time of data.

### Brief Description of Drawings

FIG. 1 is a block diagram of an image communication system including an image communication apparatus in the embodiment of the present invention;
FIG.2 is a diagram showing a data process at an image reading section and image processing section;
FIG.3 is a diagram showing a process of image data at a format conversion section;
FIG.4 is a diagram showing a process of image data at a format conversion section;
FIG. 5 is a diagram showing a format of a file including image data;
FIG. 6 is a diagram showing a format of a file including image data; and
FIG. 7 is an operation flow chart showing operations of an image communication apparatus in the embodiment of the present invention.

### Best Mode for Carrying Out the Invention

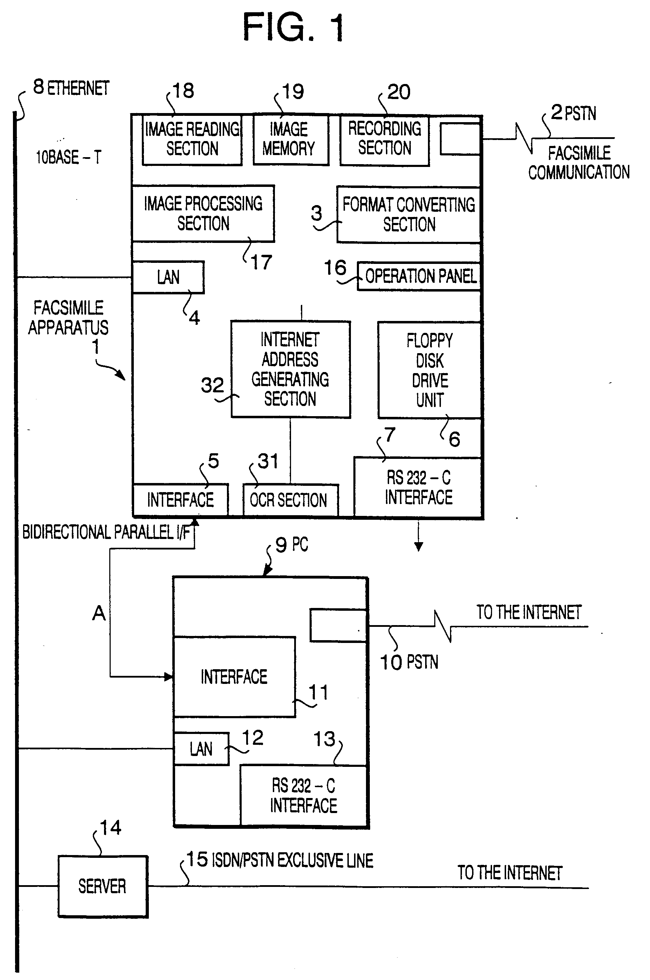

A description is given of an image communication apparatus in the embodiment of the present invention with reference to the drawings. FIG.1 is a block diagram of an image communication system including facsimile apparatus as a detailed example. The image communication system is composed of facsimile apparatus 1, computer 9, and server 4, which are connected to each other via Local Area Network 8 (For example, Ethernet 10BASE-T). Facsimile apparatus 1 transmits and receives image data such as characters, photographs, etc., computer 9 transmits and receives these image data, control signals and so on between the facsimile apparatus 1, and server 14 takes the role of a server on the Local Area Network 8. Furthermore, each is connected to a peripheral communication network (for example, facsimile network, Internet) via communication lines 2, 10 and 15 (for example, public telephone lines and so on.).

The facsimile apparatus 1 is composed of format conversion section 3, LAN (Local Area Network) unit 4, interface sections 5 and 7, FD (floppy disk) unit 6, OCR (Optical Character Reader) section 31, and Internet address generation section 32. The format conversion section 3 has a function of converting the data format in compliance with the communication protocol on a communication network, wherein, for example, image data for facsimile is converted into image data for the Internet, and to the contrary, the image data for the Internet is converted into the image data for facsimile.

Furthermore, the format conversion section 3 converts data by BASE 64 and so on, under the standard MIME (Multiple Internet Mail Extension) in compliance with RFC (Request For Comment) 821.

The LAN unit 4 converts data of the facsimile apparatus 1 and data of the Local Area Network 8 on the basis of the network protocol of the Local Area Network 8. The interface sections 5and 7 transmit and receive data, control signals, etc. with the computer 9, using parallel transmission and serial transmission, and the FD unit 6 stores image data of the facsimile apparatus 1.

In the OCR section 31, the facsimile apparatus 1 optically reads a document and detects characters from the read document, and the format conversion section 3 generates an address on the basis of the detected characters.

Furthermore, the facsimile apparatus 1 has, in order to achieve functions of a usual facsimile apparatus, operation panel 16 for inputting instructions, image processing section 17 for compacting and expanding the image data, image reading section 18 for reading an original paper such as documents, photographs and so on, and generating image data, image memory 19 for temporarily storing image data, and recording section 20 for printing image data.

The computer 9 is composed of interfaces 11 and 13, and LAN unit 12. The interfaces 11 and 13 transmit and receive image data and control signals between the facsimile apparatus 1 and other computers (not illustrated), and the LAN unit 12 converts data to be transmitted and received via the Local Area Network 8 in compliance with the protocol of the Local Area Network.

The server 14 is composed of a comparatively large-scaled computer or workstation in order to achieve the above-mentioned server functions.

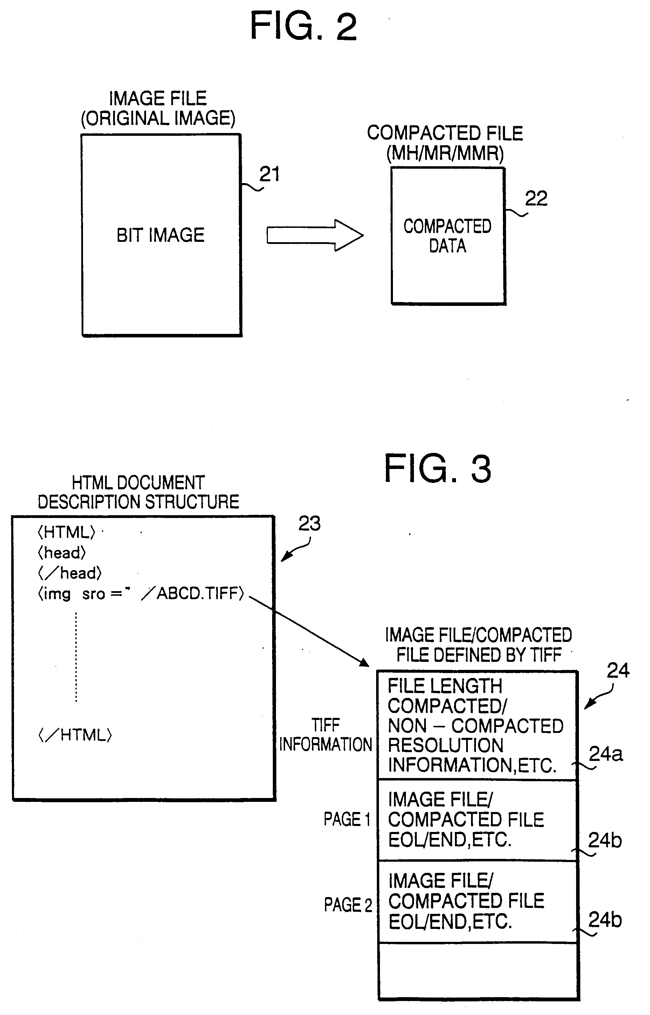

Next, a description is given of operations in the facsimile apparatus. FIG.2 is a diagram showing processing of data in the image reading section and image processing section. The image reading section 18 generates bit map data 21 consisting of binary codes (0 and 1) on the basis of the read original image data (not illustrated). Thereafter, the image processing section 17 converts the bit map data 21 into compacted bit map data 22 by compacting the same by an image compacting technique (for example, MH, MR and MMR). The image memory 19 stores the bit map data 21 and compacted bit map data 22.

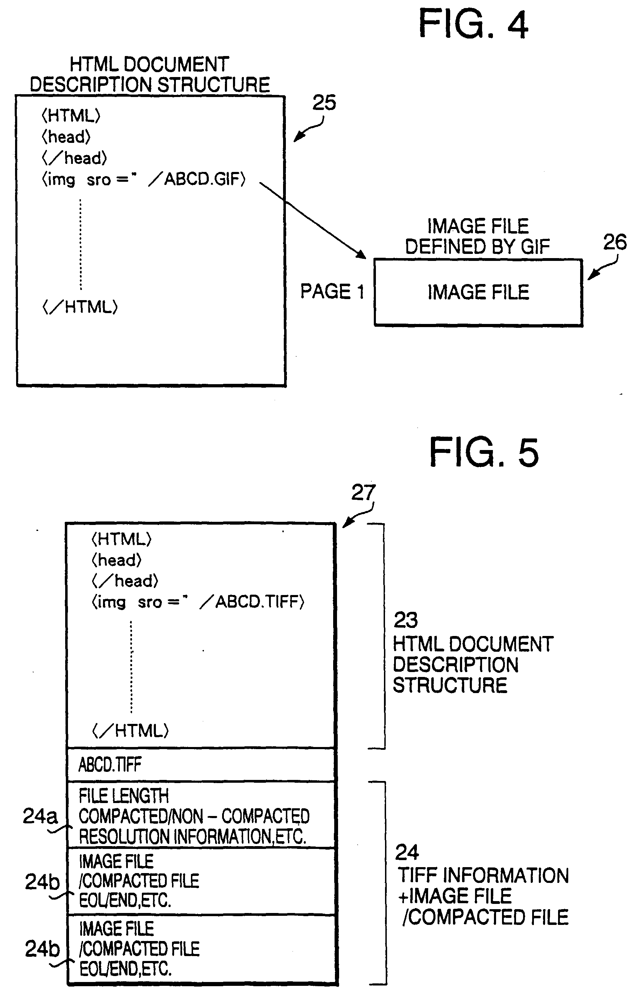

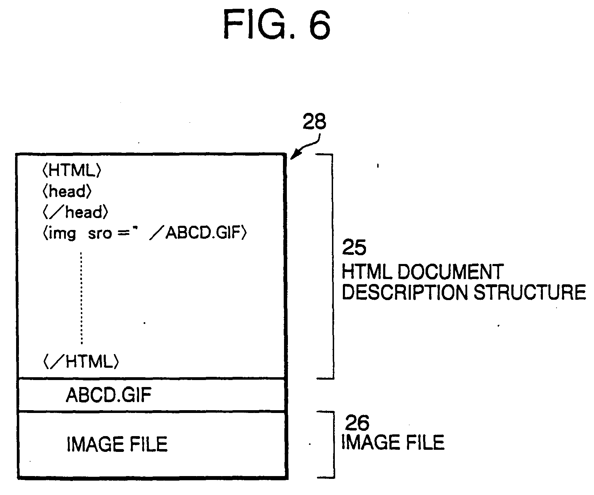

FIG. 3 and FIG. 4 are diagrams showing processing of image data at the format converting section. FIG.5 and FIG.6 are diagrams showing a format of file including the image data. The format converting section 3 generates a description file 23 or a description file 25 appropriate for the Internet, using a language (for example HTML language) for web pages on WWW (World Wide Web), that is, for home pages, in order to adapt the above-mentioned bit map data 21 or the compacted bit map data 22 to a file format on the Internet. In more detail, it is declared, by defining the data 21, 22 by using TIFF (Tagged Image File Format) or GIF (Graphics Interface Format) in the language, that the data 21, 22 are image data. Thereby, the data 21 and 22 will be handled as image data in the language.

Here, image file 24 defined by TIFF is composed of image data area 24b having image data corresponding to the data 21, 22, , and information area 24a having information concerning size of the image data area 24b, the presence and absence of image compacting or expanding, resolution and so on. As a result, a combined file 27 in which the description file 23 and image file 24 are combined is transmitted and received on the Internet.

As well, the image file 26 defined by GIF is composed of only an image data area having image data corresponding to the data 21 and 22. As a result, combined file 28 in which the description file 25 and image file 26 are combined is transmitted and received on the Internet.

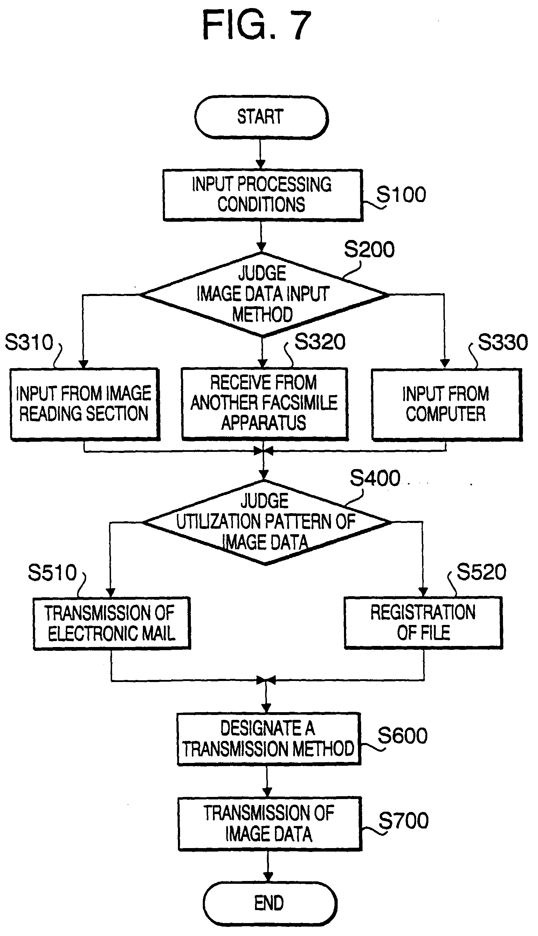

A description is given of operations of an image communication system. FIG. 7 is a flow chart showing operations of the image communication system. Hereinafter, the operations thereof will be described in detail with reference to FIG. 7.

Step S100: Inputting method of image data and information such as utilization pattern of image data are inputted, using the operation panel 16 of facsimile apparatus 1.

Furthermore, as input methods of image data, there are provided inputting through the image reading section 18, receiving from other facsimile apparatuss, inputting from the interface section 5 and so on, and as utilization patterns of image data, transmission of electronic mail on the Internet, and registration of image data on the Internet are prepared. As necessary, an address, etc. which receives image data is inputted.

In detail, using the operation panel 16 of the facsimile apparatus 1 to designate functions to be operated, an operator selects an input method of image data, designates a utilization pattern of image data, and inputs a destination address which is to receive the image data. And the operation panel 16 displays information designated by the operator and requests the operator to check whether or not the designated information is correct. The operator checks the designated information, wherein if the designated information is correct, the set information is established, and if the designated information is incorrect, the information is designated again. The established information is temporarily stored in a register and so on.

Step S200: The facsimile apparatus 1 judges which one is selected, as an input method of image data, and carries out the following controls responding to the result.

Step S310: In the case where "Input from the image reading section 18" is selected as an input method of the image data, the image reading section 18 starts reading a document placed on a paper feeding tray. And the image reading section 18 stores the read image data in the image memory 19.

Step S320: In the case where "Receiving from another facsimile apparatus" is selected as an input method of image data, the facsimile apparatus 1 receives image data from another facsimile apparatus (not illustrated) and stores the image data in the image memory 19.

In detail, first, the facsimile apparatus 1 detects whether or not image data arrives via a communication line 2. The facsimile apparatus 1 checks whether or not, when detecting the same, a dial-in signal, or the like is continued after a calling signal. In the case where the dial-in signal or the like is detected after the calling signal, the received image data is stored in the image memory 19. Furthermore, in the case where no dial-in signal., etc. can be detected after the reading signal, the facsimile apparatus 1 carries out a usual facsimile communication.

Step $330: In the case where "Input from a computer" is selected as an input method of image data, the facsimile apparatus 1 receives image data from computer 9 and stores the received image data in the image memory 19. Furthermore, in the case where no address is inputted when inputting processing information, the OCR section 31 and Internet address generation section 32 extract portions of characters from the image data and identify the address when these image data are inputted.

Step S400: The facsimile apparatus 1 judges which one is selected as a utilization pattern of image data.

Step S510: In the case where "transmission of an electronic mail on the Internet" is selected as a utilization pattern of image data, the image processing section 17 generates image files defined by GIF and TIFF on the basis of the above-mentioned image data. And the format conversion section 3 converts the image files in compliance with the MIME standards, and simultaneously inserts the address inputted or extracted in the column of the address of electronic mail.

In detail, for example, the format conversion section 3 starts a processing program for MIME conversion. The format conversion section 3 generates MIME header information using information designated by the operation panel 16 under this processing program (for example, information concerning the address, devices and so on). Furthermore, the GIF file is related to content type by the format conversion section 3. Furthermore, the facsimile apparatus 1 fetches an appointed area of image data from the inputted image data, and performs the character identification based on the fetched image data. If the identified characters are recognized as an address of electronic mail, the address is inserted into the header portion of MIME as a destination address of the electronic mail.

Step S520: In the case where "Registration onto the Internet" is selected as a utilization pattern of image data, the image processing section 17 generates an image file defined by GIF and TIFF on the basis of the image data. And, the format conversion section 3 prepares a description file and an image file, as shown in FIG.3 and FIG.4, using the HTML language for the Internet. Thereafter, as shown in FIG.5 and FIG.6, a combined file constituted by these files is generated. Furthermore, by incorporating the above-mentioned address, the generation of a file to be registered is now completed.

Furthermore, when converting these image data, it is judged whether or not the image data is compacted. If it is judged that the data is compacted, the image data is converted after the image data is expanded. However, in the case where it is set that the image data should not be expanded when inputting processing information, the image data is converted without being expanded.

In detail, first, the format conversion section 3 starts a processing program for HTML conversion. The format conversion section 3 carries out the declaration of HTML, setting of head, designation of image information (for example, designation of img src = "/ABCD. Gif and so on) under the processing program. By such a processing, image data to be transmitted is related to a file to be registered. Furthermore, the generation of a file to be registered is completed by incorporating a URL (Uniform Resource Locator) address firstly designated by the operation panel, URL address identified by the character identification or the like.

Step S600: A method for transmitting the generated electronic mail and the generated file to be registered, that is, concretely a transmission route is designated by the operation panel 16. An operator selects any one of an internal modem, Local Area Network (Server 14) and computer 9 as a transmission method.

Step S700: The facsimile apparatus 1 transmits the generated electronic mail and the generated file to be registered, into the Internet. The data is immediately transmitted when a communication line 2 is used, the electronic mail and the file to be registered are transferred to the computer 9 when a communication line 10 is used, and the electronic mail and the file to be registered are transferred to the server 14 when a communication line 15 is used. Furthermore, as necessary, the electronic mail and the file to be registered may be stored by the FD unit 6 in a floppy disk.

More concretely, the following procedures are carried out.

In the case where "Use of an internal modem" is selected as a transmission method of image data, SMTP (Simple Mail Transfer Protocol), TCP/IP and PPP (Point to Point Protocol) are set as a communication protocol, in the case where "Use of Local Area Network" is selected, SMTP, TCP/IP and Ethernet are established as a communication protocol, and in the case where "Use of computer" is selected, FTP is established.

Furthermore, in the case where "Use of internal modem" is selected after the above-mentioned setting is completed, the facsimile apparatus 1 transmits an electronic mail by being connected to the Internet via communication line 2, and in the case where "Use of Local Area Network" is selected, an electronic mail or a file to be registered is transmitted to the server 14 via the Local Area Network 8, wherein the server 14 transfers the electronic mail or the file to be registered via communication line 15, and in the case where "Use of computer" is selected, the electronic mail or the file to be registered is outputted into the computer 9, wherein the computer 9 transfers the electronic mail or the file to be registered via communication line 10.

In addtioin, the procedure of receiving image data from the Internet is as shown below. In the case where the image data is received directly from the Internet, the facsimile apparatus 1 receives an electronic mail under the communication protocol POP, converts characters of the received electronic mail to image data using fonts prepared in the facsimile apparatus and prints the converted image data and the image data the received electronic mail that are not character codes together by recording section 20. Furthermore, in the case where data is received through a Local Area Network, the facsimile apparatus 1 receives an electronic mail from the server 14 under the communication protocol POP and processes the received electronic mail in the same manner as that described above.

In the image communication apparatus described above in the embodiment of the present, although image data for facsimile is converted so that it can be transmitted and received via the Internet, it is also possible to convert image data for the Internet to image data which can be transmitted and received by facsimile communication.

Although the image communication apparatus described above in the embodiment of the present has only a function of converting image data between facsimile communication and the Internet, the apparatus can also have a conventional facsimile function, or with the apparatus, it is possible to selectively actuate both functions.

### Industrial Applicability

As described above, an image communication apparatus according to the present invention is very useful as an apparatus for converting data for two or more communication networks having different communication protocols, and in particular, this system is suitable for application as an apparatus which is able to transmit and receive image data for facsimile coincident with the facsimile communication protocol on a computer network such as the Internet unified into HTML language and TCP/IP protocol.

## Claims

1. An Image communication apparatus comprising:
first image data converting means for converting a first image data coincident with a communication protocol of a first image communication network into a second image data coincident with a communication protocol of a second image communication network;
second image data converting means for converting said second image data into said first image data;
first image transmitting means for transmitting the converted first image data to said first image communication network; and
second image transmitting means for transmitting the converted second image data to said second image communication network.

2. The image communication apparatus according to claim 1, wherein said first image data converting means comprises an image reading means for reading an image, and image generating means for generating said first image data on the basis of the read image.

3. The image communication apparatus according to claim 1, wherein said first image data converting means comprises an image compacting means for compacting an image.

4. The image communication apparatus according to claim 3, wherein said first image data converting means comprises a judging means for judging whether or not said first image data is compacted image data, and an expanding means for expanding said first image data where it is judged that said first image data is compacted.

5. The image communication apparatus according to claim 4, wherein said first image data converting means comprises an instruction inputting means for inputting instructions regarding whether or not the compacted first image data is expanded, and an expansion prohibiting means for prohibiting expansion of the compacted first image data for said expanding means when the inputted instruction does not instruct that said compacted first image data is expanded.

6. An image communication method comprising the steps of:
inputting a first image data complying with a communication protocol on a first image communication network;
converting said first image data into a second image data complying with a communication protocol on a second image communication network; and
transmitting said second image data into said second image communication network.

7. The image communication apparatus according to claim 6, wherein the converting step comprising the steps of:
extracting valuable data as information from said first image data; and
assigning the extracted data to an appointed position in said second communication protocol.

8. The image communication method according to in claim 7, wherein in said extracting step, character data and static image data are separately extracted, and in said assigning step, said character data and said static image data are respectively assigned to appointed positions in said second communication protocol.

9. A facsimile apparatus comprising:
facsimile data transmitting and receiving means for transmitting and receiving data coincident with a facsimile communication protocol between another facsimile apparatus;
Internet data transmitting and receiving means for transmitting and receiving at least one of electronic mail and home page on the Internet;
Local Area Network data transmitting and receiving means for transmitting and receiving data on a Local Area Network having at least one of computer and server;
read data generating means for reading an original image paper and generating data expressing the image;
facsimile-Internet converting means for converting at least one of data generated by said read data generating means, data received by said facsimile data transmitting and receiving means, and data received by the Local Area Network data transmitting and receiving means, into data coincident with the protocol of at least one of said electronic mail and said home page; and
Internet-facsimile converting means for converting at least one of an electronic mail and home page received by said Internet data transmitting and receiving means into at least one of data coincident with the protocol of the facsimile communication and data coincident with the protocol of the Local Area Network.

10. The facsimile apparatus according to claim 9, wherein said facsimile data transmitting and receiving means comprises a compacted data receiving means for receiving compacted data expressing an image generated by said other facsimile apparatus on the basis of the protocol of facsimile communication, and said facsimile-Internet converting means comprises a compacted data converting means for converting the compacted data expressing the image into data coincident with at least one of the protocols of said electronic mail and said home page.

11. The facsimile apparatus according to claim 9, wherein said read data generating means comprises data compacting means for compacting data expressing said image on the basis of the protocol of facsimile communication, and said facsimile-Internet converting means comprises a compacted data converting means for converting the compacted data expressing said image into data coincident with at least one protocol of said electronic mail and said home page.

12. The facsimile apparatus according to claim 9, wherein said Local Area Network data transmitting and receiving means transmits at least one of said electronic mail and said home page via at least one of computer and server on said Local Area Network.

13. The facsimile apparatus according to claim 9, further comprising character identifying means for identifying characters from data which expresses an image, address extracting means for extracting at least one of IP address and URL address from the identified characters, and an address adding means for adding the extracted address to at least one of said electronic mail and said home page .

14. A facsimile communication method comprising the steps of:
inputting data by at least one of steps of receiving data coincident with a protocol of facsimile communication from another facsimile apparatus, reading an image original paper and generating data expressing the image, and receiving data via Local Area Network;
converting one of said data into data coincident with at least one of the protocols for electronic mail and home page on the Internet; and
outputting the converted data to the Internet by transmitting.

15. The facsimile communication method according to claim 14, wherein said inputting step comprises a compacted data inputting step for inputting data expressing images compacted on the basis of the protocol of facsimile communication.

16. The facsimile communication method according to claim 15, wherein said converting step comprises a compacted data converting step for converting the compacted data expressing said image to data coincident with at least one of the protocols of said electronic mail and said home page.

17. The facsimile communication method according to claim 14, wherein said outputting step comprises a transmission step for transmitting said converted data via a Local Area Network.

18. The facsimile communication method according to claim 14, wherein said converting step comprises a step of identifying characters from data expressing an image, a step of extracting at least one of IP address and URL address from the identified character, and a step of adding said extracted address to at least one of said electronic mail and home page.

19. A facsimile communication method comprising the steps of:
receiving at least one of electronic mail and home page as an input;
converting data into data coincident with the protocol of facsimile communication; and
outputting the converted data, which is at least one of printing the converted data, storing the converted data, and transmitting the converted data to a Local Area Network.
